# EUROPEAN PATENT APPLICATION

(11) **EP 4 807 954 A1**
(43) Date of publication of application: **16.09.2026**
(21) Application number: 26153171.9
(22) Date of filing: 21.01.2026
(51) Int. Cl.: H02K 7/116, F16H 49/00, B60P 1/44, B66F 11/04

(54) **ELECTROMECHANICAL ROTATING ACTUATOR FOR AERIAL PLATFORMS**

(30) Priority: 10.03.2025 IT 202500004926
(71) Applicant: Meta Hydraulic S.r.l., 42048 Rubiera (RE) (IT)
(72) Inventor: MANCINI, Moreno, 42048 Rubiera (RE) (IT); BALUGANI, Thomas, 42048 Rubieria (RE) (IT)
(74) Representative: Preti, Lisa

(57) **Abstract**

An electromechanical rotating actuator (4) which, installed at the end of the arm (2) of an aerial platform, supports and orients the basket (3), allowing the operator to perform their activity at a height.

The rotary motion to orient said basket is imparted on the central shaft (5) and on the flange (16) solidly constrained to it, at the correct speed, magnitude of rotation and appropriate torque, by an electric motor by means of a harmonic gear reducer coaxial with said motor and with the central shaft (5), all enclosed and protected inside a cylindrical casing (15) of limited dimensions in both diameter and length and with the possibility of adapting and registering the magnitude of the rotation arc without exceeding 360° in any case.

## Description

The present electromechanical rotating actuator is intended to replace the devices currently used to support the operator basket on aerial platforms, independently of the type of means on which said platform is applied.

The basket support and rotation devices currently present on the market, used to orient it conveniently according to the operating zone, cause the rotary movement primarily with a hydraulic command.

An old rudimentary system, not classifiable as an actuator, used the action of two hydraulic cylinders which, when applied to the ends of two levers, caused the support shaft to perform a partial clockwise and anticlockwise rotation; this was abandoned, due to the limited angular travel it allowed.

In order to achieve a 180° rotation of the basket, there was a switch to use of a rotating actuator with spool (pinion), rack and hydraulic cylinder: in addition to being cumbersome, due to wear of the teeth, the solution generated clearance in the coupling that resulted in angular oscillations of the basket.

After the layout of this latter system was changed, following replacement of the rack with a worm screw and the pinion with a helical gear, a rotation unit was obtained on which the worm screw was driven by a hydraulic orbital motor.

Due to the larger diameter of the helical gear compared to the rack pinion, the influence of clearance on the teeth is less appreciable; the overall dimensions of this rotation unit are fairly limited and the solution is still applied to a certain extent.

However, the most widely used hydraulic rotating actuator is the one formed of a cylinder inside which a piston, engaged with special helical teeth to the central shaft and to the body of the cylinder, transforms the axial stroke thereof into a rotary motion of the central shaft.

It is extremely compact in manufacture and requires highly precise working of the teeth to limit clearance and prevent angular oscillations of the basket. It also requires the installation of check valves to avoid retrograde motion, i.e. to ensure that the basket does not move, in rotation, under a transverse thrust that is off-centred relative to the axis of the actuator.

The most highly requested angular travel is 180°; for more limited travel, end-stop spacers are conveniently inserted inside the actuator cylinder; these spacers must be inserted during assembly, customising the actuator. For this type of actuator, there is a general need to have a hollow central shaft, with through hole: certain manufacturers use this hole for the passage of cables and small tubes, others insert a through safety tie rod that grips and keeps connected the two arms, upper and lower, of the fork attachment that supports the basket.

A further need of aerial platform manufacturers is to obtain lightweight components, particularly for applications on wheeled vehicles intended to travel on public roads.

It is intended to respond to these needs with the present invention, particularly insofar as concerns lightness, non-reversibility, reduced angular clearance and limited dimensions.

The project provides for the insertion, in the overall dimensions of an equivalent model of a hydraulic rotating actuator, of an electric motor with high drive torque and which is coupled to a harmonic gear reducer coaxial with said motor; both these members are crossed by the central shaft, which is free to perform its angular travel supported by two large tapered roller bearings.

The harmonic gear reducer, installed in the configuration with just three basic components, obtains the greatest saving in weight possible, ensures non-reversibility and has an angular clearance of virtually zero.

Insofar, as concerns limitation of angular travel, it is sufficient to provide a pair of end-stop sensors that read the angular position of the central shaft and arrest the electric motor when the pre-established position is reached. The invention is illustrated with the assistance of three figures.

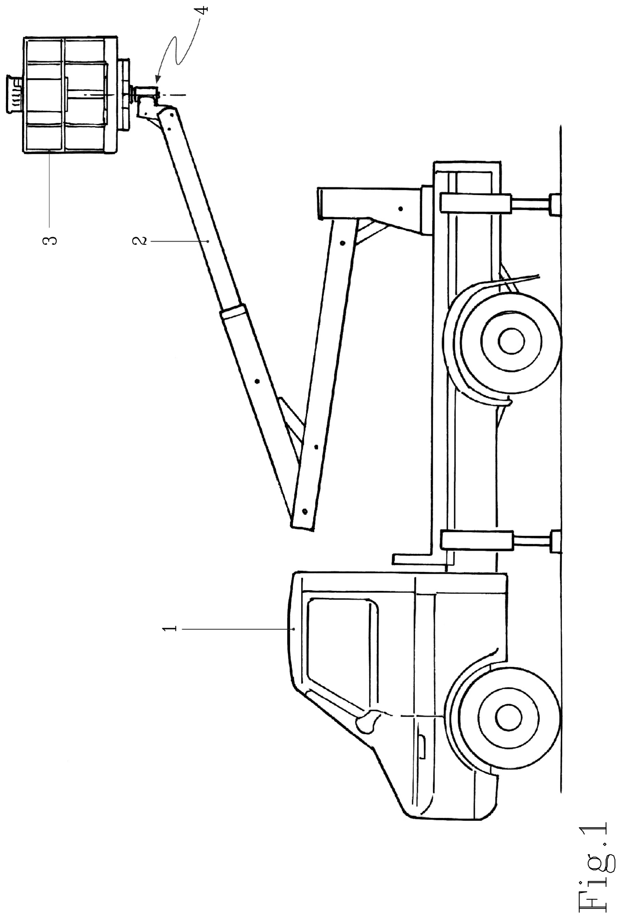

Figure 1 depicts a generic aerial platform, in order to provide an example of the application and the function of the actuator.

In Figure 2, the actuator is shown in a longitudinal section of a preferred version with central shaft and second flange.

Figure 3 shows the cross-section of the actuator at the end-stop devices.

The rotating actuator 4 of the present invention is formed of a cylindrical casing 15 inside which are housed the mechanical members that develop the functions that said actuator is required to perform: rotate by an angle not exceeding 360° in order to orient the basket 3 in relation to the working needs of one or more workers who are operating at height and also support the loads that said basket transmits to it.

The loads are formed of the weight of the basket 3 itself, the work tools loaded on board, the operators, the forces exerted by the operators or tools against fixed and rigid structures (buildings, scaffolding, etc.), any action of the wind.

The combination of these loads transforms, at actuator level, into: an axial load, a radial load, an overturning moment with various orientations, a torque; these are all transmitted to the actuator through the attachment flanges of its rotating central part, meaning the central shaft 5 and the flange 16.

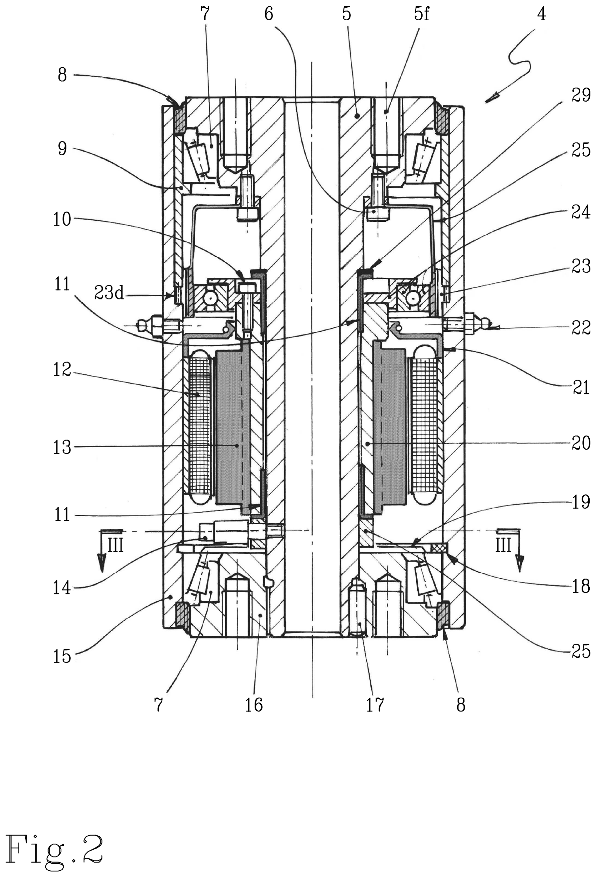

The central shaft 5 terminates, in the upper part in Figure 2, with a flange integral with it, on which threaded holes 5f are obtained; it is also crossed by a central through hole and at its second end the flange 16 is applied, screwed on and locked with a set of cylindrical pins 17 capable of transmitting torque.

This central shaft unit is supported by a pair of bearings 7, of the tapered type arranged in an "O" shape, in which the first bearing is applied under head to the central shaft 5 at the flange, its head (outer ring) is centred on and abuts on the bushing 9, in turn centred and resting on the inner seat of the cylindrical casing 15; the second bearing is applied under the flange 16 and its head is centred directly on the inner seat of said cylindrical casing and abuts on the retaining ring 18.

Gaskets 8 which protect the bearings 7 and the entire mechanism of the rotating actuator 4 are inserted between the cylindrical casing 15, the flange 16, and the end flange of the central shaft 5.

The stator 12 of the electric motor is inserted through interference into the cylindrical casing 15; the rotor 13 of said motor is integral with the hollow shaft 20, which starts to rotate when the stator is supplied with electric current.

Said hollow shaft rotates on the central shaft 5 guided radially and constrained axially by the bushing-bearing 11 of flanged type, the axial support occurs below on the bushing 28 and above against the shoulder washer 29.

Behind the stator 12 a seal ring 21 is inserted, centred and pressed on the cylindrical casing 15, the sealing lip of which slides on the hollow shaft 20, so as to separate the compartment housing the stator 12 from the one above in which the harmonic gear reducer is housed.

The harmonic gear reducer comprises three elements, which are in the order: circular spline 23, wave generator 24 and flexspline wheel 25.

The circular spline 23 has inner toothing capable of coupling with the flexspline wheel 25 having, in contrast, an outer toothing with two teeth less than the inner one; said spline is defined as fixed because it must be constrained to the cylindrical casing 15 with a coupling capable of supporting both the maximum torque developed by the gear motor (dynamic torque) and the static stall torque produced by external actions, sometimes accidental.

In order to guarantee the constraint between the cylindrical casing 15 and the circular spline 23, a coupling is proposed, in the sectional view in Figure 2, formed of a grooved profile 23d with lowered toothing and with fine pitch so as not to produce an increase in the outer diameter of said casing (and a consequent increase in weight); other systems of constraint are possible, such as milled notches on the cylindrical casing 15 coupled with peripheral ridges on the circular spline 23.

Axial locking of the circular spline 23 is ensured by the bushing 9, which presses on said spline following the pre-load on the pair of bearings 7 consequent upon screwing of the flange 16 onto the threaded end of the central shaft 5.

The flexspline wheel 25 must be coupled to the members of the actuator according to the instructions of the manufacturer of the harmonic gear reducer, both in terms of connection of its output flange (all the screws 6 provided, material class thereof and tightening torque included) and in providing the spaces to allow the elastic deformation to which it is subject during rotation.

The wave generator 24 causes the gear of the circular spline 25 to assume an elliptical shape, so that the teeth of said toothed wheel located towards the ends of the major axis of the ellipse are meshing with the inner toothing of the circular spline 23, whereas those located at the minor axis are not meshed.

The deforming element is also called a wave generator 24 due to the continual swaying thereof created by the alternating orientation of the major and minor axes of the toothed ellipse; this is the origin of the name "harmonic" for this type of gear reducer.

Details of functioning of the mechanism are not provided, as this is present in the prior art, even though not very intuitive. The fact is that the harmonic gear reducer reverses the direction of rotation and develops high gear ratios between coaxial input and output shafts; in the specific case, the hollow shaft 20 is the input shaft and the central shaft 5 is the output shaft.

Greasing nipples 22 are applied on the cylindrical casing 15 at the compartment that encloses the harmonic gear reducer, which provide lubrication for it and for the bearing 7 above, and also for the bushing-bearing 11.

The bearing 7 positioned in support of the flange 16 is simply lubricated for life with "long life" grease, in consideration of its extremely low rotation speed (lower than 1 rpm); it is prudently shielded by a protection plate 19 inserted between said bearing and the retaining ring 18, so as to prevent leakage of the grease and entry of contaminants.

The rotating actuator installed on the aerial platform is not permitted to rotate more than 360°, since there is a risk of twisting and damaging of the cables that arrive at the control panel present on the basket 3.

In the current hydraulic version, in addition to the cables, much more cumbersome hydraulic pipes are present.

The most highly requested angle of rotation is 180°. On hydraulic models, the angle of rotation is a design specification and any limitation thereof is obtained using mechanical end-stops.

In the present actuator, limitation of the angular travel is obtained by arresting rotation of the electric motor once the pre-established position is reached.

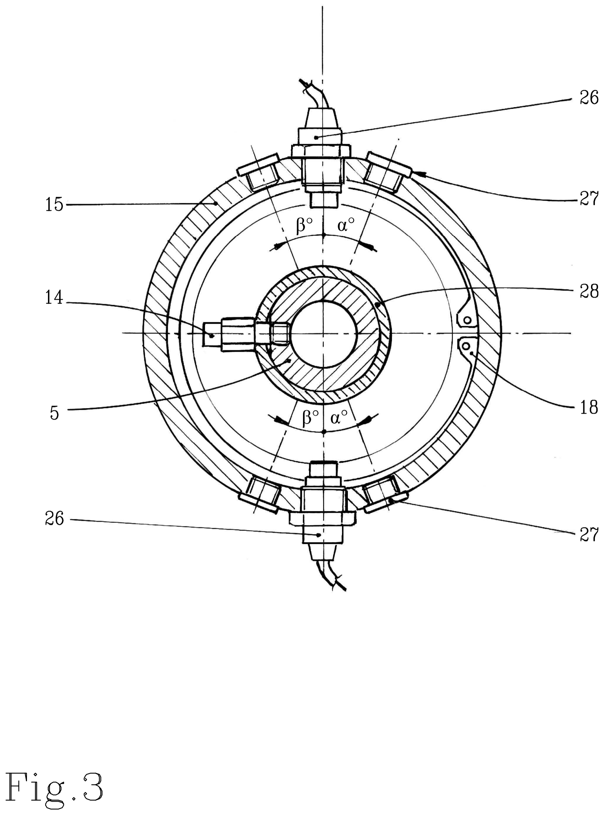

The proposed solution, depicted in Figure 2 and Figure 3, consists of applying onto the central shaft 5, inside the actuator body, a probe tip 14 screwed onto the stem of said shaft in phase with the holes 5f present on the attachment flange.

On the cylindrical casing 15, a set of radial threaded holes, on the plane on which the probe tip 14 lies, can house a pair of sensors 26, which will be positioned according to the user's needs; in Figure 3, they are shown in the classic 180° version, with the remaining holes closed by the plugs 27.

In this manner, the choice of angular travel can be made at any time, both upon first assembly and during the life of the aerial platform, if authorised by the manufacturer.

The following advantages emerge from comparing the present electromechanical rotating actuator with a hydraulic equivalent thereof:
- in the same overall dimensions, there is a more lightweight actuator, thanks both to the lightness of the harmonic gear reducer and to the absence of hydraulic check valves,
- the harmonic gear reducer guarantees non-reversibility of the motion and the absence of angular clearance on the basket, which means greater comfort for the operator,

- there is no need for the hydraulic pipes that reach the basket from the rotation base of the platform, as they are replaced by electrical cables which are smaller and easier to install,
- there is the possibility of choosing the magnitude of rotation of the actuator or possibly altering it subsequently in order to satisfy special work needs.

In the present description, the functioning of the actuator has been illustrated as a body containing an electric motor, a reduction mechanism, end-stop devices, load-bearing elements to which to attach the basket; the multitude of methods for fixing the basket and fixing the cylindrical casing 15 to the arm 2 of the aerial platform have not been discussed.

Said cylindrical casing can obviously be provided with a variety of welded and welded and bolted attachments, even with complex geometry, in order to satisfy the needs of connection to the arm 2 of the aerial platform; these solutions are developed in order to limit weight and overall dimensions without relinquishing the load-bearing capacity.

## Claims

1. Electromechanical rotating actuator (4) for support and the orientation rotation of the basket (3) of an aerial platform in which an electric motor controls the rotation of the central shaft (5), connected to the aforementioned basket, by means of a harmonic gear reducer, irreversible, with zero backlash, with high reduction ratio consisting of:
- a cylindrical casing (15)
- an electric motor with stator (12) integral with the cylindrical casing (15) and rotor (13) integral with the hollow shaft (20)
- an harmonic gear reducer consisting of a circular spline (23), a wave generator (24), a flexspline wheel (25)
- a central shaft (5) supported at one end by a first bearing (7)
- a flange (16) coupled at the other end of the aforementioned central shaft and supported by a second bearing (7)
- a pair of seal and protection gaskets (8)
- a seal ring (21)
- one or more greasing nipples (22)
- a bushing (28)
- a probe tip (14)
- a retaining ring (18)
- a protective plate (19)
- a pair of sensors (26)
**characterized by** an harmonic gear reducer installed inside the cylindrical casing (15) including a circular spline (23) with inner toothing which is fixed in rotation by means of a grooved profile (23d) and fixed in translation by means of a bushing (9) with the aforementioned cylindrical casing (15), a wave generator (24) made to rotate by a hollow shaft (20) to which is fixed, by means of screws (10), a flexspline wheel (25) with external toothing meshed with the inner toothing of the aforementioned circular spline (23) and with two teeth less than that circular spline (23) which, by moving back two teeth at every turn of the wave generator (24) sets in rotation the central shaft (5) to which it is connected by means of screws (6) and also **characterized by** the fact that the harmonic gear reducer is enclosed in a compartment protected by the seal ring (21) and lubricated with grease through nipple (22) and that the amplitude of the angular rotation of the central shaft (5) is defined by the positioning of the sensors (26) which detect the position of the probe tip (14).

2. Rotating actuator as per claim 1 **characterized by** a hollow shaft (20) on which is stably fitted the rotor (13) of the electric motor, which turns on the central shaft (5) supported by the bushings-bearing (11) and is axially constrained since the flanges of the aforementioned bushings-bearing seat against the shoulder washer (29) and bushing (28), respectively.

3. Rotating actuator as per claims 1 and 2 **characterized by** the fact that the wave generator (24) has a perforated flange through which passes the central shaft (5) and is fixed in rotation and translation with the hollow shaft (20) by means of the screws (10).

4. Rotating actuator as per the previous claims **characterized by** a seal ring (21) which separates the compartment which houses the harmonic reducer from the one underneath which houses the electric motor.

5. Rotating actuator as per claim 4 **characterized by** the fact that the compartment housing the harmonic reducer is lubricated with grease by means of the nipples (22), grease which can also reach the upper bearing (7) and the bushings-bearing (11).

6. Rotating actuator as per the previous claims **characterized by** a protection plate (19) inserted between the external ring of the bearing (7) and retaining ring (18) the function of which is to retain the "long life" grease applied to the aforementioned bearing and prevent its contamination.

7. Actuator as per the previous claims **characterized by** a probe tip (14) installed in the lower part of the central shaft (5), applied in a correct angular position (timing) with the holes (5f) on its face of the upper flange;
the probe tip (14) follows the aforementioned shaft as it rotates and when it aligns with the sensors (26), which represent the end of travel of actuator rotation, it stops the motion of the electric motor.

8. Actuator as per the previous claims **characterized by** the fact that on the cylindrical casing (15), on a level with the surface on which the probe tip (14) rests, it is possible to conveniently make a number of threaded holes able to house the sensors (26) which, beginning from the 180° preferred angular excursion of the basket (3), can be re-positioned to also obtain (180°+ 2 α°) or (180° - 2 β°) excursions.

9. Actuator as per claim 8 **characterized by** the fact that the angular excursion of the basket (3) can be changed at any time, without work being required on the electrical circuits of the machine, simply by changing the position of the sensors (26) and tapping vacant the holes with plugs (27); this should only be done in the case of particular operational requirements of the work site.

10. Rotating actuator as per all the previous claims **characterized by** the fact that customized structural components can be fitted/welded to the cylindrical casing (15) for the specific application of connecting to the end part of the boom (2) of the aerial platform.
